# EUROPÄISCHE PATENTSCHRIFT

(11) **EP 0 852 864 B1**
(45) Veröffentlichungstag und Bekanntmachung des Hinweises auf die Patenterteilung: **17.04.2002**
(21) Anmeldenummer: 96938955.0
(22) Anmeldetag: 26.09.1996
(51) Int. Cl.: H04L 12/56, H04Q 11/04

(54) **VERFAHREN ZUM AUSLESEN VON FEHLERSTATISTIKDATEN**
PROCESS FOR FETCHING OUT ERROR STATISTICS DATA
PROCEDE D'EXTRACTION DE DONNEES STATISTIQUES RELATIVES AUX ERREURS

(30) Priorität: 26.09.1995 DE 19535800
(43) Veröffentlichungstag der Anmeldung: 15.07.1998
(73) Patentinhaber: SIEMENS AKTIENGESELLSCHAFT, 80333 München (DE)
(72) Erfinder: HOMER, Russell, San Jose, Ca,95124 (US); BRAZDRUM, Helmut, D-80803 München (DE)
(86) Internationale Anmeldenummer: DE9601844
(87) Internationale Veröffentlichungsnummer: WO9712462

(56) Entgegenhaltungen:
- WO-A-93/03567
- DE-A- 4 227 118
- AT&T TECHNICAL JOURNAL, Bd. 72, Nr. 6, November 1993, US, Seiten 39-47, XP000434018 M PASHAN ET AL:

## Beschreibung

Die Erfindung betrifft ein Verfahren zum Auslesen von Fehlerstatistikdaten gemäß dem Oberbegriff des Patentanspruchs 1.

Es handelt sich demnach um das Auslesen von Fehlerstatistikdaten, die in gedoppelten, im mikrosynchronen Parallellauf betriebenen Verarbeitungseinheiten zur Verarbeitung von ATM-Informationen entstehen (vgl. z.B. WO-A-93/03567). Die Verarbeitungseinheiten sind dabei an ein ggf. gedoppeltes Koppelfeld angeschlossen, wobei sie zur Erzeugung des mikrosynchronen Parallellaufs jeweils bei Fehlerfreiheit der empfangenen zu verarbeitenden Informationen bzw. der auszusendenden Informationsverarbeitungsergebnisse ein die entsprechende Verarbeitungsphase kennzeichnendes Synchronisiersignal an die Partnereinheit abgeben, auf das der Beginn der dortigen Verarbeitungsphase aufsynchronisiert wird. Bei Ausbleiben eines Synchronisiersignals von seiten der Partner-Einheit unterbindet die betroffene Verarbeitungseinheit jedoch auch im Falle eines ordnungsgemäßen Empfangs einer Information wie beim Empfang einer gestörten Information eine Informationsverarbeitung, verwirft die empfangene Information also. Entsprechendes gilt in Senderichtung. Hier wird trotz Vorliegen eines störungsfreien Informationsverarbeitungsergebnisses stattdessen eine Leerinfirmation abgegeben.

Die Verarbeitungseinheiten stehen über eine Bus-Schnittstelle mit einer zentralen Steuereinheit in Verbindung, die unter anderem zur Überwachung des mikrosynchronen Betriebs von den Verarbeitungseinheiten an sie gelangenden Informationen miteinander vergleicht.

Bei der geschilderten Konstellation können in den gedoppelten Verarbeitungseinheiten unterschiedliche Fehlersituationen entstehen, so daß auch die Fehlerstatistiken unterschiedlich sind, ohne daß hierdurch der mikrosynchrone Parallellauf gestört sein muß.

Würden nun die Fehlerstatistikdaten zum Zwecke der Auswertung wie ATM-Informationen direkt über die erwähnten Bus-Schnittstelle ausgelesen und damit auch einem Vergleich zugeführt, so würde mit großer Wahrscheinlichkeit eine Ungleichheit und damit fälschlicher Weise der Verlust der Mikrosynchronitat signalisiert.

Die Aufgabe der Erfindung besteht daher darin, ein Verfahren anzugeben, das ein Auslesen der Fehlerstatistikdaten gestattet, ohne daß dieser Effekt auftritt und dessen Durchführung keinen zusätzlichen Hardwareaufwand und nur geringen zusätzlichen Steuerungsaufwand erfordert.

Diese Aufgabe wird mittels der im Kennzeichen des Patentanspruchs 1 angegebenen Merkmale gelöst.

Die erfindungsgemäße Lösung läuft demnach darauf hinaus, die Fehlerstatistikdaten wie die Ergebnisse der Informationsverarbeitung von ATM-Informationen durch die Verarbeitungseinheiten zu behandeln, dabei aber dafür zu sorgen, daß diese nach ihrer Aussendung auf das Leitungsnetz für die Übertragung von ATM-Informationen, an das die Verarbeitungseinheiten angeschlossen sind, wieder wie zu verarbeitende ATM-Informationen zurückübertragen werden und dabei wegen des vorausgesetzten Doppelungsbetriebs an beide Verarbeitungseinheiten gelangen. Als Konsequenz hieraus werden über die Bus-Schnittstelle jeweils von beiden Verarbeitungseinheiten gleichzeitig übereinstimmende Fehlerstatistikdaten geliefert, die sich jeweils auf eine der Verarbeitungseinheiten beziehen, so daß an sich vorhandene Unterschiede der Fehlerstatistikdaten für die beiden Verarbeitungseinheiten nicht zu einer fälschlichen Signalisierung des Verlusts der Mikrosynchronitat führen.

Eine weitere Ausgestaltung der Erfindung ist in einem Unteranspruch gekennzeichnet. Es wird dadurch das Auslesen von Fehlerstatistikdaten auch dann ermöglicht, wenn die Verarbeitungseinheiten im active/standby-Betrieb arbeiten, bei dem die im standby-Zustand befindliche Verarbeitungseinheit in den ATM-Informationszellen Leerinformationen sendet und ermöglicht, daß auch Statistikdaten dieser Verarbeitungseinheit ausgelesen werden können, ohne daß es erforderlich ist, einen active/standby-Wechsel der Verarbeitungseinheiten herbeizuführen.

Nachstehend wird die Erfindung anhand eines Ausführungsbeispiels unter Bezugnahme auf eine Figur näher erläutert.

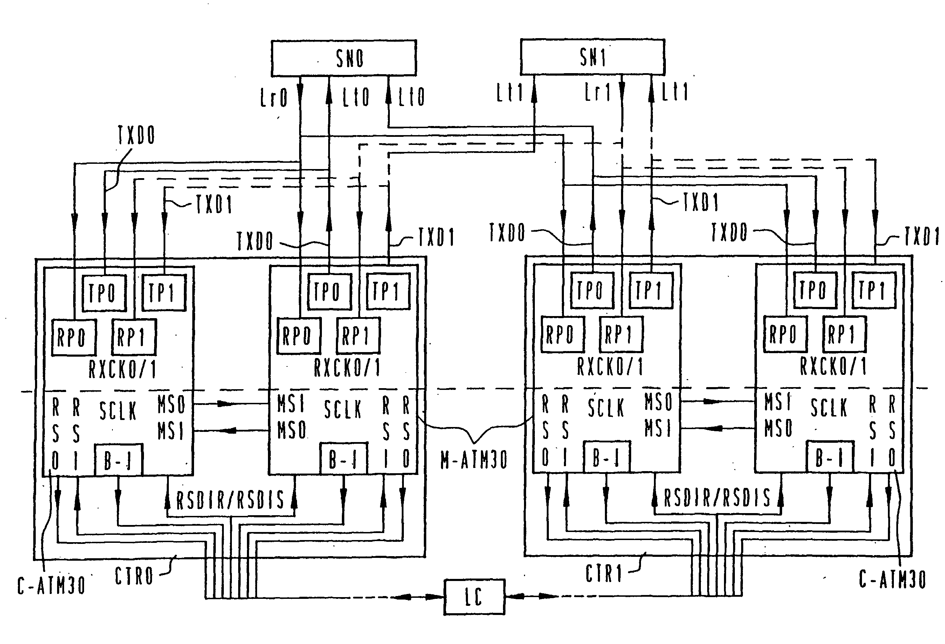

In der Figur sind zwei Verarbeitungseinheiten CTR0 und CTR1 zur Verarbeitung von ATM-Informationen dargestellt. Diese Verarbeitungseinheiten sind an ein Koppelnetz angeschlossen, das im dargestellten Fall gedoppelte Teile SN0 und SN1 aufweist. Die Verarbeitungseinheiten CTR0 und CTR1 sind über ein Netz von Empfangsleitungen Lr0, Lr1 und Sendeleitungen Lt0, Lt1 für die Übertragung von ATM-Informationen in der Weise mit den Koppelnetzteilen SN0 und SN1 verbunden, daß von jedem Koppelnetzteil kommende ATM-Informationen gleichermaßen sowohl an die eine als auch an die andere Verarbeitungseinheit gelangen (über deren Empfangseingänge RP0 und RP1) und daß von diesen Verarbeitungseinheiten abgegebene ATM-Informationen gleichermaßen über Sendeausgänge TP0 und TP1 beiden Koppelnetzteilen SN0 und SN1 zugeführt werden können.

Die Verarbeitungseinheiten CTR0 und CTR1 weisen hier jeweils zwei Verarbeitungskomponenten C-ATM30 und M-ATM30 auf, die in einer sogenannten Master-Checker-Konfiguration arbeiten, d.h. bei der Checker-Verarbeitungskomponente C-ATM30 sind die Sende-Ausgänge TP0 und TP1 als Eingänge geschaltet, die von den Sendeausgängen TP0 und TP1 der jeweilig zugehörigen Master-Verarbeitungskomponente M-ATM30 abgegebene und in erster Linie für die Weitergabe an die Koppelnetzteile SN0 bzw. SN1 bestimmte ATM-Sende-Informationen als Eingangsinformationen empfangen. Hier nicht dargestellte interne Komparatoren der Checker-Verarbeitungskomponenten vergleichen die auf diesem Wege empfangenen Eingangssignalen mit intern als Ausgangssignale erzeugten Signalen und geben bei festgestellter Ungleichheit eine entsprechende Fehlermeldung ab.

Die geschilderte Master-Checker-Konfiguration ist allerdings keine Voraussetzung für die Anwendung des erfindungsgemäßen Verfahrens.

Durch eine die Blockbilddarstellung der Verarbeitungskomponenten C-ATM30 und M-ATM30 der beiden Verarbeitungseinheiten CTR0 und CTR1 querende gestrichelte Linie ist angedeutet, daß die von den Koppelnetzteilen SN0 und SN1 her empfangenen ATM-Informationen mit einem Empfangstakt RXCK0/1 auftreten und daß die Verarbeitung dieser Informationen mit einem hiervon unabhängigen internen Systemtakt SCLK erfolgt. Die Informationsaussendung zu den Koppelnetzteilen hin erfolgt mit dem Takt TXD0 bzw. TXD1. Da die Verarbeitungseinheiten bzw. deren Verarbeitungskomponenten mikrosynchron arbeiten sollen, sind besondere Vorkehrungen für die Übergabe der ATM-Informationen vom einen zum anderen Taktsystem zu treffen. Diese bestehen in dem gegenseitigen Austausch von Synchronisiersignalen MSO zwischen den zusammengehörigen Verarbeitungskomponenten, die jeweils als Synchronisiereingangssignal MSI wirken. Da überdies die empfangenen Informationen auf dem Weg von den Koppelnetzteilen SN0 und SN1 zu den Verarbeitungseinheiten in unterschiedlicher Weise von Übertragungsfehlern betroffen sein bzw. die Informationsverarbeitungsergebnisse in sich fehlerhaft sein können, was durch nicht dargestellte Überwachungseinrichtungen erkannt werden kann, sind zur Aufrechterhaltung des mikrosynchronen Betriebs weitere Maßnahmen zu ergreifen, die darin bestehen, daß jeweils im Falle des Empfangs einer ordnungsgemäßen ATM-Information und bei Vorliegen eines fehlerfreien Informationsverarbeitungsergebnisses die Verarbeitungseinheiten ein die eigene Verarbeitungsphase kennzeichnendes Synchronsiersignal RSO über eine zentrale Steuereinheit LC an die Partnereinheit abgeben, das als Synchronisierungssignal RSI empfangen wird, auf das der Beginn der dortigen Verarbeitungsphase aufsynchronisiert wird, und daß das Ausbleiben eines Synchronisiersignals von seiten der Partner-Einheit bei der betroffenen Verarbeitungseinheit dazu führt, daß auch im Falle eines ordnungsgemäßen Empfangs einer ATM-Information wie beim Empfang einer gestörten ATM-Information die empfangene Information verworfen und als Verarbeitungsergebnis eine Leerinformation abgegeben wird. Zur Steuerung dieser Vorgänge dienen die von der zentralen Steuereinheit gelieferten Steuersignale RSDIR und RSDIS.

Die angedeuteten Maßnahmen zur Gewährleistung des mikrosynchronen Parallellaufs der Verarbeitungseinheiten bzw. deren Verarbeitungskomponenten sind Gegenstand einer weiteren Patentanmeldung mit gleicher Priorität.

Die unter dem Einfluß des internen Systemtaktes SCLK stehenden Teile der Verarbeitungskomponenten der Verarbeitungseinheiten enthalten Bus-Schnittstellen B-I, über die eine zentrale Steuereinheit LC erreichbar ist. Zur Überprüfung des mikrosynchronen Parallellaufs der Verarbeitungseinheiten bzw. deren Verarbeitungskomponenten, werden empfangene ATM-Informationen auf Aufforderung hin über diese Bus-Schnittstellen der zentralen Steuereinheit LC zur Durchführung eines Vergleichs zugeführt.

Die vorerwähnten Übertragungsfehler, sowie gegebenenfalls weitere Fehler, wie Synchronisationsfehler, die in den Verarbeitungskomponenten C-ATM30 und M-ATM30 erkannt werden, führen dort zur Weiterschaltung von Fehlerzählern. Es entstehen damit also Fehlerstatistikdaten, deren Auswertung ebenfalls Aufgabe der erwähnten zentralen Steuereinheit LC ist.

Da bei den beiden Verarbeitungseinheiten normalerweise diese Fehlerstatistikdaten unterschiedlich sind, würde eine Weitergabe derselben über die erwähnten Bus-Schnittstellen B-I, die, wie dargelegt, zu einem Vergleich führt, zur Signalisierung eines Verlustes der Mikrosynchronität führen, obwohl ein solcher gar nicht vorliegt.

Erfindungsgemäß wird daher so vorgegangen, daß die Fehlerstatistikdaten genauso wie als Ergebnis der Informationsverarbeitung von den Verarbeitungskomponenten an die Koppelnetzteile SN0 bzw. SN1 abzugebenden ATM-Informationen in den Verarbeitungskomponenten in ATM-Sendezellen gepackt und an die Koppelnetzteile abgegeben werden. Durch entsprechende Einträge in den Kopfteilen dieser speziellen ATM-Sendezellen erfolgt eine Adressierung jeweils an die Verarbeitungskomponente, von der die Zellen ausgesendet worden sind. Die Kopfteile enthalten auch ein auf den besonderen Charakter der ATM-Zellen hinweisendes Bit. Wegen der geschilderten Doppelung der Verarbeitungseinheiten CTR0 und CTR1 gelangen die Statistikdaten nach entsprechender Vermittlung durch das Koppelfeld als ATM-Empfangszellen gleichzeitig an samtliche Verarbeitungskomponenten beider Verarbeitungseinheiten. Unter der Voraussetzung einer fehlerfreien Übertragung zu diesen Verarbeitungskomponenten können diese Zellen dann über die Bus-Schnittstellen B-I wie die übrigen zum Zwecke der Überprüfung des mikrosynchronen Parallellaufs behandelten ATM-Empfangszellen ausgelesen und einer Auswertung durch die zentrale Steuerung zugeführt werden, ohne daß fälschlicherweise ein Verlust der Mikrosynchronität signalisiert wird.

Wenn die beiden Verarbeitungseinheiten CTR0 und CTR1 im active/standby-Betrieb arbeiten, sendet die im standby-Zustand befindliche Verarbeitungseinheit in den ATM-Sendezellen lediglich Leerinformationen aus. Die Entscheidung darüber, welche der Verarbeitungseinheiten den active-Zustand und welche den standby-Zustand einnimmt, hängt dabei vom Binärzustand eines von einer übergeordneten Steuerung gelieferten an der Verarbeitungseinheit anliegenden Steuerbits ab. Ein internes Steuerbefehlsbit, das mit der Bildung der ATM-Sendezellen in Zusammenhang steht, hat im Normalbetrieb denselben Binärwert wie das erwähnte von der übergeordneten Steuerung gelieferte externe Steuerbefehlsbit mit der Konsequenz, daß ATM-Sendezellen mit ATM-Informationen gebildet werden, wogegen dieses interne Steuersignalbit bei der im standby-Betrieb arbeitenden Verarbeitungseinheit den entgegengesetzten Binärwert zu dem diese Verarbeitungseinheit beeinflussenden externen Steuerbefehlsbit aufweist, mit der erwähnten Konsequenz der Aussendung von ATM-Sendezellen, die Leerinformationen enthalten.

In Abweichung von diesem Normalbetrieb wird nun bei der im standby-Betrieb arbeitenden Verarbeitungseinheit im Falle der beabsichtigten Aussendung von Fehlerstatistikdaten in ATM-Sendezellen gezielt für die Bildung dieser Zellen das erwähnte Steuerbefehlsbit invertiert, so daß die Verarbeitungseinheit in Abweichung von ihrem sonstigen Verhalten im standby-Betrieb ATM-Sendezellen aussendet, die mit solchen Statistikdaten gefüllt sind. Eine Umschaltung vom active-Betrieb zum standby-Betrieb durch die übergeordnete Steuerung mittels des erwähnten externen Steuerbefehlsbits ist daher nicht erforderlich.

## Patentansprüche

1. Verfahren zum Auslesen von Fehlerstatistikdaten, die in im mikrosynchronen Parallellauf betriebenen und an ein gegebenenfalls gedoppeltes Koppelnetz (SNO, SN1) angeschlossenen gedoppelten Verarbeitungseinheiten (CTR0, CTR1) zur Verarbeitung von ATM-Informationen entstehen,
wobei ferner zur Erzeugung des mikrosynchronen Parallellaufs die Verarbeitungseinheiten jeweils bei Fehlerfreiheit einer empfangenen zu verarbeitenden ATM-Information und bei Fehlerfreiheit eines abzugebenden Informationsverarbeitungsergebnisses ein die entsprechende Verarbeitungsphase kennzeichnendes Synchronisiersignal (RSO) an die Partnereinheit abgeben, auf das der Beginn der dortigen Verarbeitungsphase aufsynchronisiert wird, bei Ausbleiben eines Synchronisiersignals von seiten der Partner-Einheit die betroffene Verarbeitungseinheit jedoch auch im Falle eines ordnungsgemäßen Empfangs einer ATM-Information wie beim Empfang einer gestörten ATM-Information eine Informationsverarbeitung unterbindet bzw. auch im Falle eines ungestörten Informationsverarbeitungsergebnisses stattdessen eine Leerinformation abgibt,
wobei ferner die Verarbeitungseinheiten über eine Busschnittstelle (B-I) mit einer zentralen Steuereinheit (LC) in Verbindung steht, die unter anderem auch die an sie gelangenden Statistikdaten auswertet,
wobei von einem Koppelnetzteil kommende Informationen an beide Verarbeitungseinheiten gelangen und von einer Verarbeitungseinheit ausgesendete Informationen allen vorhandenen Koppelnetzteilen zugeführt werden,
und wobei zur Überwachung des Mikrosynchronbetriebs der Verarbeitungseinheiten die von diesen jeweils über die Busschnittstelle abgegebenen Informationen auf Übereinstimmung verglichen werden,
**dadurch gekennzeichnet, daß** die Fehlerstatistikdaten in den Verarbeitungseinheiten (CTR0, CTR1) wie Verarbeitungsergebnisse in ATM-Sendezellen eingefügt werden, die an das Koppelfeld (SNO,SN1) gesendet werden und die an ihren Ursprungsort adressiert sind und daher nach entsprechender Durchschaltung als ATM-Empfangszellen wieder an die betreffende Verarbeitungseinheit gelangen und wie sonstige ATM-Informationen über die zugehörige Busschnittstelle (B-I) an die zentrale Steuereinheit (LC) gelangen.

2. Verfahren nach Anspruch 1,
**dadurch gekennzeichnet, daß**
bei einem active/standby-Betrieb der Verarbeitungseinheiten (CTR0, CTR1), bei dem die im standby-Zustand befindliche Verarbeitungseinheit in den ATM-Informationszellen Leerinformationen sendet, die Aussendung von Statistikdaten durch diese Verarbeitungseinheit dadurch herbeigeführt wird, daß ein internes Steuerbefehlsbit, das je nach Festlegung bei Übereinstimmung oder Nichtübereinstimmung mit einem von einer übergeordneten Steuerung gelieferten und den standby-Betrieb der Verarbeitungseinheit bestimmenden externen Steuerbefehlsbit, die Aussendung von ATM-Zellen mit Leerinformationen veranlaßt, gezielt für die ATM-Zellen, in die Statistikdaten eingefügt werden sollen, gegenüber dem im standby-Betrieb eingenommenen Zustand invertiert wird.

## Claims

1. Method for reading out error statistics data which are produced in duplicated processing units (CTR0, CTR1) for processing ATM information operated in microsynchronous parallel operation and connected to a possibly duplicated switching matrix (SN0, SN1),
wherein, furthermore, for the purpose of generating microsynchronous parallel operation, the processing units in each case output a synchronization signal (RSO) identifying the corresponding processing phase to the partner unit in the case of freedom from errors of a received ATM information item to be processed and in the case of freedom from errors of an information processing result to be output, to which synchronization signal the beginning of the processing phase of the partner unit is synchronized, in the case of a lack of a synchronization signal from the partner unit, however, the processing unit affected stops information processing even in the case of the correct reception of an ATM information item just like during the reception of a faulty ATM information item, or, respectively, outputs a blank information item even in the case of an undisturbed information processing result, the processing units also being connected via a bus interface (B-I) to a central processing unit (LC), which among other things also evaluates the statistics data reaching it,
wherein information coming from a switching matrix part reaches both processing units and information sent out by a processing unit is supplied to all existing switching matrix parts, and wherein, for the purpose of monitoring the microsynchronous operation of the processing units, the information items output by these units in each case via the bus interface are compared for a match, **characterized in that** the error statistics data are inserted in the processing units (CTR0, CTR1) like processing results into ATM transmit cells which are sent to the switching matrix (SN0, SN1) and which are addressed to their point of origin and therefore, after corresponding switching-through, again reach the relevant processing unit as ATM receive cells and reach the central control unit (LC) via the associated bus interface (B-I) like other ATM information.

2. Method according to Claim 1, **characterized in that** in the case of an active/standby mode of the processing units (CTR0, CTR1), in which the processing unit which is in the standby state, sends blank information in the ATM information cells, the sending-out of statistics data by this processing unit is effected by the fact that an internal control command bit which initiates the sending-out of ATM cells with blank information in the case of a match or non-match, depending on specification, with an external control command bit supplied by a higher-level controller and determining the standby mode of the processing unit, selectively for the ATM cells into which the statistics data are to be inserted, is to be inverted compared with the state assumed in standby mode.

## Revendications

1. Procédé pour extraire des données statistiques d'erreurs qui sont formées dans des unités de traitement en double (CTR0, CTR1) qui fonctionnent en mode parallèle microsynchrone, qui sont raccordées à un réseau de connexions éventuellement en double (SN0, SN1) et qui sont destinées au traitement d'informations ATM,
dans lequel, de plus, pour la production de l'exécution parallèle microsynchrone, les unités de traitement foumissent respectivement à l'unité partenaire, en l'absence d'erreur dans une information ATM reçue à traiter et en l'absence d'erreur dans un résultat de traitement d'informations à foumir, un signal de synchronisation (RSO) qui caractérise la phase de traitement correspondante et sur lequel est synchronisé le début de la phase de traitement qui s'y déroule mais, en l'absence d'un signal de synchronisation de la part de l'unité partenaire, l'unité de traitement considérée bloque un traitement d'informations même dans le cas d'une réception normale d'une information ATM comme lors de la réception d'une information ATM erronée ou fournit même dans le cas d'un résultat de traitement d'informations non erroné une information vide à la place,
dans lequel de plus, les unités de traitement sont en liaison par l'intermédiaire d'une interface de bus (B-I) avec une unité de commande centrale (LC) qui évalue entre autres les données statistiques qui lui arrivent,
dans lequel des informations arrivant d'une partie de réseau de connexions arrivent aux deux unités de traitement et des informations émises par une unité de traitement sont envoyées à toutes les parties de réseau de connexions existantes,
et dans lequel, pour tester le fonctionnement microsynchrone des unités de traitement, les informations fournies par lesdites unités respectivement par l'intermédiaire de l'interface de bus sont comparées pour en déterminer la coïncidence,
**caractérisé par le fait que**, dans les unités de traitement (CTR0, CTR1), les données statistiques d'erreurs sont insérées comme des résultats de traitement dans des cellules d'émission ATM qui sont envoyées au réseau de connexions (SN0, SN1), qui sont adressées sur leur lieu d'origine, qui arrivent donc, après commutation correspondante, comme cellules de réception ATM à l'unité de traitement concernée et qui arrivent comme d'autres informations ATM par l'intermédiaire de l'interface de bus associée (B-I) à l'unité de commande centrale (LC).

2. Procédé selon la revendication 1,
**caractérisé par le fait que**, lors d'un fonctionnement active/standby des unités de traitement (CTR0, CTR1) dans lequel l'unité de traitement se trouvant dans l'état standby émet des informations vides dans les cellules d'informations ATM, l'émission de données statistiques est mise en oeuvre par cette unité de traitement **par le fait qu'**un bit d'instruction de commande interne, qui provoque l'émission de cellules ATM avec des informations vides selon qu'il est constaté une coïncidence ou une non-coïncidence avec un bit d'instruction de commande externe fourni par une commande de rang supérieur et déterminant le fonctionnement standby de l'unité de traitement, est inversé par rapport à l'état pris dans le fonctionnement standby dans les cellules ATM dans lesquelles des données statistiques doivent être insérées.
